(19)

Europäisches
Patentamt
European
Patent Office
Office européen
des brevets

(11) **EP 2 722 174 A1**

(12) **EUROPEAN PATENT APPLICATION**
published in accordance with Art. 153(4) EPC

(43) Date of publication:
**23.04.2014 Bulletin 2014/17**

(21) Application number: **12801082.4**

(22) Date of filing: **14.06.2012**

(51) Int Cl.:
**B32B 27/34** [(2006.01)]  **B05D 3/02** [(2006.01)]
**B05D 7/24** [(2006.01)]

(86) International application number:
**PCT/JP2012/065272**

(87) International publication number:
**WO 2012/173202 (20.12.2012 Gazette 2012/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2011   JP 2011132739**

(71) Applicant: Ube Industries, Ltd.
**Ube-shi, Yamaguchi 755-8633 (JP)**

(72) Inventors:
• **NAKAYAMA, Tomonori**
  **Ube-shi**
  **Yamaguchi 755-8633 (JP)**
• **NAKAYAMA, Takeshige**
  **Ube-shi**
  **Yamaguchi 755-8633 (JP)**

(74) Representative: **Cabinet Plasseraud**
**52, rue de la Victoire**
**75440 Paris Cedex 09 (FR)**

(54) **METHOD FOR PRODUCING POLYIMIDE LAMINATE, AND POLYIMIDE LAMINATE**

(57)    The present invention relates to a method for producing a polyimide laminate, comprising:
forming a thin film of a polyamic acid solution composition on a substrate; and
heating the obtained laminate of the substrate and the thin film of the polyamic acid solution composition at least at a temperature of from more than 150°C to less than 200°C for 10 minutes or more, and then heating the laminate at the highest temperature of from 400°C to 550°C, to form a polyimide layer having a thickness of less than 50 $\mu$m on the substrate.

EP 2 722 174 A1

**Description**

Technical Field

The present invention relates to a method for producing a polyimide laminate comprising a polyimide layer which has such high heat resistance that thermal decomposition in the temperature range of from 500°C to 650°C is suppressed.

Background Art

It has been known that polyimide films having particularly excellent properties such as heat resistance, chemical resistance, radiation resistance, electrical insulation properties, dimensional stability, mechanical properties, and the like may be produced by
applying a polyamic acid solution, which is prepared by reacting aromatic tetracarboxylic dianhydride(s) comprising 3,3',4,4'-biphenyltetracarboxylic dianhydride as the main component and aromatic diamine(s) comprising p-phenylenediamine as the main component in an substantially equimolar ratio in an aprotic polar solvent such as dimethylacetamide at a relatively low temperature, on a substrate;
heating and drying the resultant coating film to form a self-supporting film;
peeling the self-supporting film from the substrate; and then subjecting the self-supporting film to heat treatment for imidization.

Patent Literature 1 discloses a polyimide film having improved adhesion properties which is produced by the above-described method, and contains carbon element, oxygen element and nitrogen element in a specific ratio in the surface of the film, and contains phosphorus at a content of 5 to 500 ppm in the whole film. Examples of the polyimide film include one obtained from 3,3',4,4'-biphenyltetracarboxylic dianhydride and p-phenylenediamine (Reference Example 1, and Example 1). In each of Reference Example 1 and Example 1 of Patent Literature 1, a solution of a polyamic acid having a relatively high molecular weight (inherent viscosity: 2.66) is flow-cast/applied on a stainless belt, dried at 120°C for 20 minutes, and then peeled from the stainless belt to provide a self-supporting film, and then the self-supporting film is heated/imidized at 150°C for 5 minutes, at 200°C for 7 minutes, at 250°C for 9 minutes, and at 450°C for 7 minutes to provide a polyimide film having a thickness of 75 $\mu$m. Additionally, in other Examples, self-supporting films are produced and heated in the same manner as in Example 1, to provide polyimide films having a thickness of 75 $\mu$m.

Patent Literature 2 proposes a polyimide film having improved mechanical strength which is produced by the above-described method, and contains an organophosphorus compound at a content of 0.5 to 5 wt% based on the polyimide. The polyimide may be formed from very various types of tetracarboxylic acid component and diamine component, and may be preferably formed mainly from pyromellitic dianhydride and 4,4'-diaminodiphenyl ether, but examples of the polyimide film include one obtained from biphenyltetracarboxylic dianhydride and p-phenylenediamine (Example 4). In Examples of Patent Literature 2, however, an organophosphorus compound, acetic anhydride as a dehydrating/ring-closing agent, and isoquinoline as a catalyst are mixed into a polyamide acid solution, and then the resultant mixed solution is flow-cast/applied on a smooth surface into the form of a film, and dried at 100°C for 10 minutes to provide a self-supporting film, and then the self-supporting film is peeled from the smooth surface, and the obtained self-supporting film is heated at 300°C for 10 minutes and at 420°C for 3 minutes while four corners of the film are mechanically fixed to provide a polyimide film having a thickness of 125 $\mu$m.

Meanwhile, Patent Literature 3 relates to a method for producing a flexible thin-film solar cell. Patent Literature 3 discloses that a polyimide precursor is applied on a supporting substrate (substrate) such as glass, and subjected to heat treatment for imidization, to form a polyimide coating (heat-resistant resin layer), thereby providing a heat-resistant base substrate, and subsequently a transparent electrode layer, an amorphous silicon layer, a back electrode layer, and the like are laminated on the heat-resistant base substrate, and a protective layer is formed thereon, and then the laminate is separated between the supporting substrate (substrate) and the heat-resistant base substrate (polyimide coating), thereby providing a flexible thin-film solar cell. Concerning the heat-resistant base substrate (polyimide coating), Patent Literature 3 also discloses that outgassing may occur when an amorphous silicon layer is formed.

As for aromatic polyamide films, Patent Literature 4 discloses that when a thin film of ITO or the like is formed on a surface of the film by a sputtering method or the like, a volatile component generated from the inside of the film may cause the reduction in degree of vacuum in the system during sputtering, and therefore efficiency of sputtering may be reduced, and normal deposition of ITO particles may be prevented, resulting in the reduction in adhesion of the ITO film to the film and inadequate heat resistance, and that when the aromatic polyamide film is used as a substrate for liquid crystal, other members, including liquid crystal element, may be deteriorated due to outgassing during use.

Citation List

Patent Literature

Patent Literature 1: JP-A-H08-143688
Patent Literature 2: JP-A-H02-28257
Patent Literature 3: JP-A-H05-315630
Patent Literature 4: JP-A-2005-298590

Summary of Invention

Technical Problem

As described above, in production processes of thin-film solar cells or the like, there has been a need for a polyimide laminate which comprises a high heat-resistant polyimide layer formed on a substrate, wherein a volatile component (outgas) will not be generated during a subsequent heat treatment (heat treatment in a production process of thin-film solar cells or the like), that is, thermal decomposition is suppressed.

Thus, an object of the present invention is to provide a method for producing a polyimide laminate which comprises a high heat-resistant polyimide layer on a substrate, wherein the polyimide layer has excellent properties such as heat resistance, chemical resistance, radiation resistance, electrical insulation properties, dimensional stability, and mechanical properties, and has such high heat resistance that thermal decomposition in the temperature range of from 500°C to 650°C, in particular, is suppressed.

Solution to Problem

In view of the above-described problem, the inventors have conducted intensive studies, and consequently found that a polyimide layer having such high heat resistance that thermal decomposition in the temperature range of from 500°C to 650°C is suppressed may be formed on a substrate, while maintaining the excellent properties of polyimide, by

forming a thin film of a polyamic acid solution composition, preferably a polyamic acid solution composition comprising a polyamic acid, in which the main component of tetracarboxylic acid component is 3,3',4,4'-biphenyltetracarboxylic dianhydride and the main component of diamine component is p-phenylenediamine, particularly preferably a polyamic acid solution composition comprising a polyamic acid, in which the main component of tetracarboxylic acid component is 3,3',4,4'-biphenyltetracarboxylic dianhydride and the main component of diamine component is p-phenylenediamine, and a phosphorus compound, on the substrate; and

heating the obtained laminate of the substrate and the thin film of the polyamic acid solution composition at least at a temperature of from more than 150°C to less than 200°C for 10 minutes or more, preferably 30 minutes or more, particularly preferably 60 minutes or more, and then heating the laminate at the highest temperature of from 400°C to 550°C, to form a polyimide layer having a thickness of less than 50 $\mu$m on the substrate, and thereby made the invention.

The present invention relates to the following items.

1. A method for producing a polyimide laminate comprising a substrate and a polyimide layer having a thickness of less than 50 $\mu$m, the method comprising:

forming a thin film of a polyamic acid solution composition on the substrate; and
heating the obtained laminate of the substrate and the thin film of the polyamic acid solution composition at least at a temperature of from more than 150°C to less than 200°C for 10 minutes or more, and then heating the laminate at the highest temperature of from 400°C to 550°C, to form the polyimide layer having a thickness of less than 50 $\mu$m on the substrate.

2. The method for producing a polyimide laminate according to the item 1, wherein the time period for which the laminate of the substrate and the polyamic acid solution composition is heated at a temperature of from more than 150°C to less than 200°C is 30 minutes or more.

3. The method for producing a polyimide laminate according to the item 1 or 2, wherein the polyamic acid solution composition comprises a polyamic acid, which is obtained from a tetracarboxylic acid component comprising 3,3',4,4'-biphenyltetracarboxylic dianhydride as the main component and a diamine component comprising p-phenylenediamine as the main component.

4. The method for producing a polyimide laminate according to any one of the items 1 to 3, wherein the polyamic acid solution composition comprises a phosphorus compound.

5. The method for producing a polyimide laminate according to the item 4, wherein the content of phosphorus in the polyimide layer formed [weight of phosphorus/weight of polyimide layer] is 100 to 3700 ppm.

6. The method for producing a polyimide laminate according to any one of the items 3 to 5, wherein the phosphorus compound does not have an alkyl chain or the phosphorus compound has an alkyl chain containing not more than 16 carbon atoms.

7. The method for producing a polyimide laminate according to any one of the items 1 to 6, wherein the inherent viscosity of the polyamic acid in the polyamic acid solution composition is 2.0 dL/g or less.

8. A polyimide laminate obtained by
forming a thin film of a polyamic acid solution composition on a substrate; and
heating the obtained laminate of the substrate and the thin film of the polyamic acid solution composition at least at a temperature of from more than 150°C to less than 200°C for 10 minutes or more, and then heating the laminate at the highest temperature of from 400°C to 550°C, to form a polyimide layer having a thickness of less than 50 $\mu$m on the substrate.

9. A laminate obtained by further laminating another material on a surface of the polyimide layer of the polyimide laminate according to the item 8.

10. A laminate obtained by separating the substrate of the polyimide laminate from the laminate according to the item 9.

Advantageous Effects of Invention

According to the present invention, there may be provided a method for producing a polyimide laminate which comprises a high heat-resistant polyimide layer on a substrate, wherein the polyimide layer has excellent properties such as heat resistance, chemical resistance, radiation resistance, electrical insulation properties, dimensional stability, and mechanical properties, and has such high heat resistance that thermal decomposition in the temperature range of from 500°C to 650°C, in particular, is suppressed.

The polyimide in the polyimide layer may be preferably obtained from a tetracarboxylic acid component comprising 3,3',4,4'-biphenyltetracarboxylic dianhydride as the main component and a diamine component comprising p-phenylenediamine as the main component. This polyimide has excellent properties such as heat resistance, chemical resistance, radiation resistance, electrical insulation properties, dimensional stability, and mechanical properties, and thereby a polyimide layer having such high heat resistance that thermal decomposition in the temperature range of from 500°C to 650°C, in particular, is further suppressed may be formed.

Description of Embodiments

(Method for producing a polyimide laminate)

According to the present invention, a polyimide layer having a thickness of less than 50 $\mu$m may be formed on a substrate by
forming a thin film of a polyamic acid solution composition on the substrate; and
heating the obtained laminate of the substrate and the thin film of the polyamic acid solution composition at least at a temperature of from more than 150°C to less than 200°C for 10 minutes or more, preferably 30 minutes or more, particularly preferably 60 minutes or more, and then heating the laminate at the highest temperature of from 400°C to 550°C. The polyamic acid solution composition may preferably comprise a polyamic acid obtained from a tetracarboxylic acid component comprising 3,3',4,4'-biphenyltetracarboxylic dianhydride as the main component and a diamine component comprising p-phenylenediamine as the main component, and further preferably comprise a phosphorus compound.

In the present invention, a polyamic acid may be preferably obtained in the form of a polyamic acid solution in which the polyamic acid is homogeneously dissolved in a solvent, by stirring/mixing and reacting substantially equimolar amounts of a tetracarboxylic acid component such as a tetracarboxylic dianhydride and a diamine component in a solvent at a relatively low temperature of 100°C or lower, preferably 80°C or lower, at which the imidization reaction may be suppressed. In the case where a phosphorus compound is added, a phosphorus compound may be added prior to the polymerization, and a tetracarboxylic dianhydride and a diamine may be reacted in the presence of the phosphorus compound, or alternatively, a phosphorus compound may be added to a polyamic acid solution obtained after the polymerization. The polyamic acid solution thus obtained may be used for the formation of the polyimide layer without any treatment, or alternatively, after the addition of a desired component, if necessary.

The polyamic acid used in the present invention may be preferably, but not limited to, a polyamic acid in which the main component (i.e. 50 mol% or more), preferably 80 mol% or more, more preferably 90 mol% or more, further preferably 100 mol% of the tetracarboxylic acid component is 3,3',4,4'-biphenyltetracarboxylic dianhydride, and the main component (i.e. 50 mol% or more), preferably 80 mol% or more, more preferably 90 mol% or more, further preferably 100 mol% of the diamine component is p-phenylenediamine. When using a polyamic acid having such a chemical composition, a polyimide layer having particularly excellent properties such as heat resistance, chemical resistance, radiation resistance, electrical insulation properties, dimensional stability, and mechanical properties may be formed, and more specifically, a polyimide layer having such high heat resistance that thermal decomposition in the temperature range of from 500°C to 650°C is suppressed may be formed.

In the present invention, examples of the tetracarboxylic acid component used in combination with 3,3',4,4'-biphenyltetracarboxylic dianhydride include p-terphenyl-3,3",4,4"-tetracarboxylic dianhydride, 5,5'-(1,1'-biphenyl-4,4'-diyl)bis-isobenzofuran-1,3-dione, naphthalene-1,4,5,8-tetracarboxylic dianhydride, and naphthalene-2,3,6,7-tetracarboxylic dianhydride. Examples of the diamine component used in combination with p-phenylenediamine include 4,4'-diaminobiphenyl, 4,4"-diamino-p-terphenyl, and 4,4'''-diamino-p-quaterphenyl.

The solvent used in the present invention may be any solvent, as long as the polyamic acid can be formed by the polymerization, and an aprotic polar solvent and the like, for example, may be preferably used. Preferred examples of the solvent used in the present invention include, but not limited to, N,N-di-lower-alkyl carboxylamides such as N,N-dimethylformamide, N,N-dimethylacetamide and N,N-dimethylmethoxyacetamide, N-methyl-2-pyrrolidone, dimethyl sulfoxide, dimethyl sulfone, 1,3-dimethyl-2-imidazolidinone, $\gamma$-butyrolactone, diglyme, m-cresol, hexamethylphosphoramide, N-acetyl-2-pyrrolidone, hexamethylphosphoramide, ethyl cellosolve acetate, diethylene glycol dimethyl ether, sulfolane, and p-chlorophenol. The solvent may be a mixture of two or more kinds thereof.

In the present invention, acetic anhydride and the like as a dehydrating agent; and an imidazole compound such as 1,2-dimethylimidazole, a heterocyclic compound containing a nitrogen atom such as isoquinoline, and a basic compound such as triethylamine and triethanolamine as an imidization catalyst may be used, as long as the effect of the present invention may be achieved. However, it is preferred that a dehydrating agent and an imidization catalyst are not used, because when a dehydrating agent and/or an imidization catalyst are used, the stability of the polyamic acid solution may be reduced, resulting in the difficulty of casting the polyamic acid solution on a substrate, and it may be difficult to form a polyimide layer having such high heat resistance that thermal decomposition in the temperature range of from 500°C to 650°C is suppressed.

As described above, according to the present invention, a polyamic acid solution composition may be obtained by reacting substantially equimolar amounts of a tetracarboxylic acid component and a diamine component in a solvent at a relatively low temperature of 100°C or lower, preferably 80°C or lower, at which the imidization reaction may be suppressed.

The reaction temperature may be generally, but not limited to, from 25°C to 100°C, preferably from 40°C to 80°C, more preferably from 50°C to 80°C. The reaction time may be preferably, but not limited to, from about 0.1 hours to about 24 hours, preferably from about 2 hours to about 12 hours. When setting the reaction temperature and the reaction time within the ranges as described above, a solution composition which comprises a polyamic acid having a high molecular weight may be produced with good efficiency. In general, the reaction may be preferably performed in an inert gas atmosphere, preferably in a nitrogen gas atmosphere, although the reaction may be performed in an air atmosphere.

A molar ratio of a tetracarboxylic acid component to a diamine component to be reacted [tetracarboxylic acid component / diamine component] may be preferably from about 0.90 to about 1.10, more preferably from about 0.95 to about 1.05.

In the present invention, the solid content based on the polyamic acid (in terms of polyimide) of the polyamic acid solution composition may be preferably, but not limited to, from 2 wt% to 50 wt%, preferably from 5 wt% to 40 wt%. The solution (rotational) viscosity of the polyamic acid solution composition may be preferably, but not limited to, from 1 poise to 3000 poise, preferably from 5 poise to 2000 poise, at 30°C.

The molecular weight of the polyamic acid used in the present invention may not be specifically limited.

When a polyimide film is produced, a polyamic acid having an inherent viscosity ($\eta$) of more than 2.0 dL/g and a relatively high molecular weight is generally used so as to achieve satisfactory properties. Meanwhile, when a polyamic acid having an inherent viscosity of not more than 2.0 dL/g and a relatively low molecular weight is used, it may be difficult to form a polyimide layer having properties which the polyimide layer is expected to have from its chemical composition. It may be difficult to form a polyimide layer wherein thermal decomposition in the temperature range of from 500°C to 650°C is suppressed, in particular.

However, it has become possible by employing the present invention, that is, by heating a thin film of a polyamic acid solution composition formed on a substrate at least at a temperature of from more than 150°C to less than 200°C for 10 minutes or more, and then heating the thin film at the highest temperature of from 400°C to 550°C to effect imidization, thereby forming a polyimide layer having a thickness of less than 50 μm, to form a polyimide layer having such high heat resistance that thermal decomposition in the temperature range of from 500°C to 650°C is suppressed even when a polyamic acid having an inherent viscosity (η) of 2.0 dL/g or less, preferably 1.5 dL/g or less, more preferably 1.0 dL/g or less, and a relatively low molecular weight, which is generally not used, is used, that is, a particularly desired effect may be achieved.

In other words, according to the present invention, a polyimide layer having such high heat resistance that thermal decomposition in the temperature range of from 500°C to 650°C is suppressed may be formed on a substrate, even when a solution of a polyamic acid having a relatively low molecular weight, which is generally not used for the production of polyimide films, is used.

In the present invention, the polyamic acid solution composition to be cast on a substrate may comprise a phosphorus compound in addition to a polyamic acid.

The phosphorus compound used in the present invention is not limited, as long as the compound contains a phosphorus atom in the molecule, and any such compound may be used.

The valence of phosphorus in the phosphorus compound used in the present invention is not limited, and examples of the phosphorus compound include phosphoric acid, phosphorous acid, phosphonic acid, phosphonous acid, phosphinic acid, phosphinous acid, phosphine oxide, and phosphine; and organic phosphorus compounds in which a hydrogen atom is substituted by an organic substituent group. An inorganic phosphorus such as red phosphorus, or a polyphosphoric acid may also be used.

Preferred examples of the phosphorus compound include triethyl phosphate, triphenyl phosphate, and 2-ethylhexyl phosphate as organic phosphorus compounds of phosphoric acid; aminomethylphosphonic acid, decylphosphonic acid, and phenylphosphonic acid as organic phosphorus compounds of phosphonic acid; diphenylphosphinic acid, 2-carboxyethylphosphinic acid, dimethylphosphinic acid, and 9,10-dihydro-9-oxa-10-phosphaphenanthrene-10-oxide as organic phosphorus compounds of phosphinic acid; and trimethylphosphine, triphenylphosphine, ethylene bis diphenylphosphine, and 2,2'-bis(diphenylphosphino)-1,1'-binaphthyl as organic phosphorus compounds of phosphine.

In addition, examples of the phosphorus compound having an alkyl chain include phosphates such as monoethyl phosphate, monopropyl phosphate, monobutyl phosphate, monopentyl phosphate, monohexyl phosphate, monocaproyl phosphate, monooctyl phosphate, monolauryl phosphate, monomyristyl phosphate, monocetyl phosphate, monostearyl phosphate, triethyleneglycol monotridecyl ether monophosphate, tetraethyleneglycol monolauryl ether monophosphate, diethyleneglycol monostearyl ether monophosphate, dicaproyl phosphate, dioctyl phosphate, dicapryl phosphate, dilauryl phosphate, dimyristyl phosphate, dicetyl phosphate, distearyl phosphate, tetraethyleneglycol mononeopentyl ether diphosphate, triethyleneglycol monotridecyl ether diphosphate, tetraethyleneglycol monolauryl ether diphosphate, and diethyleneglycol monostearyl ether diphosphate; and amine salts of these phosphates.

Among them, in view of suppression of thermal decomposition and coloring, a phosphorus compound which has an alkyl chain containing not more than 16 carbon atoms, more preferably not more than 12 carbon atoms, and a phosphorus compound which does not have an alkyl chain (i.e. a phosphorus compound which does not have an alkyl chain containing more than 16 carbon atoms) may be preferred, and phosphates such as triphenyl phosphate may be particularly preferred.

The phosphorus compound may be used alone or in combination of two or more kinds thereof.

The concentration of the phosphorus compound in the polyamic acid solution composition may be preferably a concentration equivalent to 1 to 25 mol%, preferably 1 to 20 mol%, more preferably 1 to 18 mol%, based on 100 mol% of the tetracarboxylic acid component. In the case of polyphosphoric acid, the "mol%" is calculated on the assumption that a repeating unit provides a molecular weight.

Furthermore, in general, the concentration of the phosphorus compound in the polyamic acid solution composition may be preferably 0.5 to 20 wt%, more preferably about 0.5 to 15 wt%, based on the total weight of the tetracarboxylic acid component and the diamine component.

When the concentration of the phosphorus compound in the polyamic acid solution composition is too low, it may be difficult to fully achieve the effect of suppressing thermal decomposition in the temperature range of from 500°C to 650°C. Meanwhile, when the concentration of the phosphorus compound is too high, a large amount of phosphorus may remain in the polyimide layer, which result in the generation of volatile component (outgas), and that is not preferred.

A phosphorus compound may be added to a polyamic acid solution either before or after polymerization. In other words, a polyamic acid solution composition comprising a phosphorus compound may be obtained by reacting a tetracarboxylic acid component and a diamine component in a solvent to provide a polyamic acid solution composition, and then adding a phosphorus compound to the polyamic acid solution composition, or alternatively, a polyamic acid solution composition comprising a phosphorus compound may be obtained by adding a tetracarboxylic acid component, a diamine component and a phosphorus compound to a solvent, and then reacting the tetracarboxylic acid component and the diamine component in the presence of the phosphorus compound in the solvent.

In the case where a phosphorus compound is added to a polyamic acid solution composition, the amount of phosphorus remaining in the polyimide layer formed in the present invention (the content of phosphorus in the polyimide layer) may be preferably a concentration (content) at which the weight of phosphorus is 3700 ppm or less, preferably 100 to 3700 ppm, more preferably 100 to 2000 ppm, more preferably 100 to 1000 ppm, further preferably about 100 to 500 ppm, based on the weight of the polyimide layer. When the concentration is too higher than the above range, a volatile component (outgas) may be caused by the phosphorus, and that is not preferred. In addition, when the content of phosphorus in the polyimide layer formed [weight of phosphorus/weight of polyimide layer] is controlled to from 100 to 3700 ppm, in particular, a polyimide layer having excellent properties may be more easily formed by casting a polyamic acid solution composition on a substrate, and then heating the polyamic acid solution composition in a state where a volatile component evaporates only from one side of the composition, to effect imidization.

The polyamic acid solution composition of the present invention may contain other additives such as a filler, as necessary.

According to the present invention, a thin film of a polyamic acid solution composition as described above is formed on a substrate, and then the obtained laminate of the substrate and the thin film of the polyamic acid solution composition is heated at least at a temperature of from more than 150°C to less than 200°C for 10 minutes or more, preferably 30 minutes or more, particularly preferably 60 minutes or more, and then heated at the highest temperature of from 400°C to 550°C, to form a polyimide layer having a thickness of less than 50 $\mu$m on the substrate.

The substrate is not limited, as long as a polyimide film may be formed on the surface thereof, but may be preferably formed from a material which is capable of withstanding a high temperature and has a low coefficient of thermal expansion because a heat treatment at an extremely high temperature is performed in the present invention. The shape of the substrate may be generally, but not limited to, a plane. Specific examples of the substrate include metal plates formed of various metals, and ceramic plates formed of various ceramics, and in view of high-temperature resistance and coefficient of thermal expansion, a glass plate may be particularly preferably used.

The method of casting a polyamic acid solution composition on a substrate is not limited, as long as a coating having a small thickness may be formed. Any conventionally-known method, for example, spin coating, screen printing, bar coating, and electro coating may be preferably applied.

In the present invention, the substrate is formed of a substantially gas-impermeable material, such as a glass plate. Accordingly, when a layer (coating layer) of a polyamic acid solution composition cast on a substrate is heated, a volatile component (a solvent, water resulting from the imidization, and the like) generated from the layer (coating layer) of the polyamic acid solution composition cannot evaporate from the substrate side and evaporates only from the other side, that is, the air (or another gas) side. According to the production method of the present invention, the layer of the polyamic acid solution composition is not subjected to heat treatment as a self-supporting film, which is peeled off from the substrate, but is subjected to heat treatment, including a heat treatment at a high temperature to complete the imidization, in a state where the volatile component evaporates only from one side of the layer.

According to the present invention, a polyamic acid solution composition is, for example, cast on a substrate to form a film of the polyamic acid solution composition on the substrate, thereby providing a laminate consisting of the substrate and the film of the polyamic acid solution composition, and then the laminate is subjected to heat treatment to complete the imidization, thereby forming a polyimide layer on the substrate. The heat treatment condition is that the polyamic acid solution composition is heated at a temperature of from more than 150°C to less than 200°C, preferably more than 155°C, more preferably more than 160°C, further preferably more than 165°C, particularly preferably more than 170°C as the lower limit, and preferably less than 195°C, more preferably less than 190°C, further preferably less than 185°C as the upper limit, for 10 minutes or more, preferably 30 minutes or more, particularly preferably 60 minutes or more, and then heated at the highest temperature of from 400°C to 550°C, preferably from 430°C to 530°C, more preferably from 460°C to 530°C. The time period for which the polyamic acid solution composition is heated at a temperature of 200°C or higher (including the time period for which the polyamic acid solution composition is heated at the highest temperature) may be appropriately selected without limitation.

According to the present invention, a polyimide laminate comprising a substrate and a polyimide layer may be obtained by forming the polyimide layer on the substrate as described above.

(Polyimide laminate)

In the polyimide laminate obtained according to the present invention, the content of phosphorus in the polyimide layer [weight of phosphorus/weight of polyimide layer] may be preferably, but not limited to, 100 to 3700 ppm, more preferably 100 to 2000 ppm, further preferably 100 to 1000 ppm, particularly preferably about 100 to 500 ppm, as described above.

The thickness of the polyimide layer in the polyimide laminate obtained according to the present invention is less than 50 $\mu$m, and may be preferably 30 $\mu$m or less, more preferably 20 $\mu$m or less. As the thickness of the polyimide layer is greater than the above range, a decomposition product from the phosphorus compound, and the like is apt to remain, which may result in the generation of excess volatile component (outgas). In addition, foaming may occur in the polyimide layer formed, which may result in the impossibility of practical use of the polyimide layer. The lower limit of the thickness of the polyimide layer may be preferably, but not limited to, 0.1 $\mu$m or more, more preferably 1 $\mu$m or more, more preferably 2 $\mu$m or more.

(Suppression of thermal decomposition of polyimide laminate in temperature range of from 500°C to 650°C)

The polyimide layer in the polyimide laminate obtained according to the present invention has such high heat resistance that thermal decomposition in the temperature range of from 500°C to 650°C is suppressed.

Herein, the 5% weight loss temperature (°C) during heat treatment of the polyimide layer is given as an index to demonstrate that thermal decomposition in the temperature range of from 500°C to 650°C is suppressed. When the 5% weight loss temperature is a high value of 610°C or higher, preferably 615°C or higher, that indicates that thermal decomposition is suppressed to a higher temperature and thermal decomposition in the temperature range of from 500°C to 650°C is sufficiently suppressed, whereas when the 5% weight loss temperature is a low value of 605°C or lower, particularly 600°C or lower, further 595°C or lower, that indicates that thermal decomposition occurs at a relatively low temperature and thermal decomposition in the temperature range of from 500°C to 650°C is not suppressed. The 5% weight loss temperature may be preferably at least higher than 595°C.

(Laminate in which another material is further laminated)

The polyimide laminate obtained according to the present invention is a polyimide laminate wherein a polyimide layer having particularly excellent properties such as heat resistance, chemical resistance, radiation resistance, electrical insulation properties, dimensional stability, and mechanical properties, and having such high heat resistance that thermal decomposition in the temperature range of from 500°C to 650°C is suppressed, in particular, is formed. Accordingly, another material such as an ITO and an amorphous silicon layer may be preferably laminated on a surface of the polyimide layer, for example, by sputtering to the polyimide laminate. And then, a laminate of the polyimide and the other material may be preferably obtained by separating the substrate from the obtained laminate of the substrate, the polyimide and the other material.

The laminate of the polyimide and the other material may be suitably used, for example, in applications such as a liquid crystal display, an EL display, an electronic paper, and a thin-film solar cell which comprise a polyimide layer as a substrate and are flexible.

Examples

Hereinafter, the present invention will be described in more detail with reference to Examples. The present invention, however, is not limited to the following Examples.

The abbreviations of the compounds used in the following examples are as follows:

s-BPDA: 3,3',4,4'-biphenyltetracarboxylic dianhydride
PPD: p-phenylenediamine

(Solid content)

The solid content of the polyamic acid solution was calculated by the following formula from the weight before drying (W1) and the weight after drying (W2), wherein the polyamic acid solution was dried at 350°C for 30 minutes.

$$\text{Solid content (wt\%)} = \{(W1 - W2) / W1\} \times 100$$

(Inherent viscosity of polyamic acid)

The inherent viscosity ($\eta_{inh}$) of the polyamic acid was calculated by the following formula from the solution viscosity of a solution prepared by homogeneously dissolving the polyamic acid solution in N-methyl-2-pyrrolidone so that the polyamic acid concentration was 0.5 g/100 mL solvent, and the solution viscosity of the solvent, wherein the solution viscosities were measured at 30°C.

$$\text{Inherent viscosity } (\eta_{inh}) = \frac{\ln (\text{viscosity of solution / viscosity of solvent})}{\text{concentration of solution}}$$

(Measurement of 5% weight loss temperature [TGA measurement method])

The 5% weight loss temperature was determined from temperature-increasing of from room temperature (25°C) to 700°C at the rate of 20°C/min using TG-DTA 2000S (MAC Science), wherein the weight at 150°C was taken as "100%".

It is assumed that the 5% weight loss is caused by the generation of volatile component (outgas) by thermal decomposition. Therefore, in the present invention, the 5% weight loss temperature was evaluated as an index of thermal decomposition in the temperature range of from 500°C to 650°C.

(Quantitative determination of phosphorus in polyimide layer)

About 50 mg of the polyimide layer sample was measured out into a quartz vessel, and nitric acid was added thereto, and then the vessel was sealed. The sample was decomposed by irradiation with microwave, and then the volume was adjusted by the addition of ultrapure water to provide a test liquid. The quantitative analysis of phosphorus content was carried out using a high resolution inductively coupled plasma mass spectrometry HR-ICP-MS (Axiom SC plus type, manufactured by Thermo Fisher Scientific K.K.).

(Observation of appearance of polyimide layer)

The appearance of the polyimide layer after heat treatment was visually observed. The case where the polyimide layer had similar transparency was evaluated as ○, the case where the polyimide layer had partially lower transparency was evaluated as △, and the case where the polyimide layer had significantly lower transparency was evaluated as ×, as compared with the polyimide layer to which a phosphorus compound was not added under the same conditions.

<Example 1>

In a 500 mL (internal volume) glass reaction vessel equipped with a stirrer and a nitrogen-gas charging/discharge tube was placed 410.1267 g of N-methyl-2-pyrrolidone as a solvent. And then, 26.8886 g (0.2486 mol) of PPD and 73.1431 g (0.2486 mol) of s-BPDA were added thereto, and the mixture was stirred at 50°C to provide a polyamic acid solution having a solid content of 18.21 %, and an inherent viscosity of 0.65 dL/g. Subsequently, 2.0006 g (0.0061 mol, 2.5 mol% based on 100 mol% of the tetracarboxylic acid component, 2.0 wt% based on the total weight of the tetracarboxylic acid component and the diamine component, the same shall apply hereinafter) of triphenyl phosphate as a phosphorus compound was added to the resultant polyamic acid solution.

The polyamic acid solution was applied on a glass plate as a substrate with a bar coater. The resultant coating film was heated at 120°C for 10 minutes, 150°C for 40 minutes, 180°C for 60 minutes, 200°C for 10 minutes, 250°C for 10 minutes, and then 500°C for 5 minutes, to form a polyimide layer having a thickness of 10 $\mu$m on the glass plate, thereby providing a polyimide laminate.

The polyimide layer was separated from the substrate, and then the TGA measurement was carried out, and the 5% weight loss temperature was determined and the value was taken as an index of outgas generation rate evaluation. The film coloring evaluation was also carried out. The results are shown in Table 1.

<Example 2>

The same procedure was performed as in Example 1 except that 5.0016 g (0.0153 mol, 6.2 mol%, 5.0 wt%) of triphenyl phosphate was added as a phosphorus compound. The results are shown in Table 1.

<Example 3>

The same procedure was performed as in Example 1 except that 15.0160 g (0.0460 mol, 18.5 mol%, 15.0 wt%) of triphenyl phosphate was added as a phosphorus compound. The results are shown in Table 1.

<Example 4>

The same procedure was performed as in Example 1 except that 5.0012 g (0.0397 mol, 16.0 mol%, 5.0 wt%) of phosphoric acid monoethyl ester was added as a phosphorus compound. The results are shown in Table 1.

<Example 5>

The same procedure was performed as in Example 1 except that 5.0012 g (0.0188 mol, 7.6 mol%, 5.0 wt%) of phosphoric acid monolauryl ester was added as a phosphorus compound. The results are shown in Table 1.

<Example 6>

The same procedure was performed as in Example 1 except that 1.2504 g (0.0100 mol, 4.0 mol%, 0.8 wt%) of polyphosphoric acid was added as a phosphorus compound. The results are shown in Table 1.

<Example 7>

In a 500 mL (internal volume) glass reaction vessel equipped with a stirrer and a nitrogen-gas charging/discharge tube was placed 449.9976 g of N-methyl-2-pyrrolidone as a solvent. And then, 13.4400 g (0.1243 mol) of PPD and 36.5598 g (0.1243 mol) of s-BPDA were added thereto, and the mixture was stirred at 50°C to provide a polyamic acid solution having a solid content of 9.10 %, and an inherent viscosity of 2.70 dL/g. Subsequently, 2.5008 g (0.0077 mol, 6.2 mol%, 5.0 wt%) of triphenyl phosphate as a phosphorus compound was added to the resultant polyamic acid solution.

The polyamic acid solution was applied on a glass plate as a substrate with a bar coater. The resultant coating film was heated at 120°C for 10 minutes, 150°C for 40 minutes, 180°C for 60 minutes, 200°C for 10 minutes, 250°C for 10 minutes, and then 500°C for 5 minutes, to form a polyimide layer having a thickness of 10 $\mu$m on the glass plate, thereby providing a polyimide laminate.

The polyimide layer was separated from the substrate, and then the TGA measurement was carried out, and the 5% weight loss temperature was determined and the value was taken as an index of outgas generation rate. The film coloring evaluation was also carried out. The results are shown in Table 1.

<Example 8>

The same procedure was performed as in Example 2 except that the thickness of the polyimide layer formed was 40 $\mu$m. The results are shown in Table 1.

<Example 9>

The same procedure was performed as in Example 2 except that the coating film of the polyamic acid solution was heated at 120°C for 10 minutes, 150°C for 40 minutes, 180°C for 60 minutes, 200°C for 10 minutes, 250°C for 10 minutes, and then 400°C for 5 minutes, to form a polyimide layer. The results are shown in Table 1.

<Example 10>

In a 500 mL (internal volume) glass reaction vessel equipped with a stirrer and a nitrogen-gas charging/discharge tube was placed 410.1267 g of N-methyl-2-pyrrolidone as a solvent. And then, 26.8886 g (0.2486 mol) of PPD and 73.1431 g (0.2486 mol) of s-BPDA were added thereto, and the mixture was stirred at 50°C to provide a polyamic acid solution having a solid content of 18.21 %, and an inherent viscosity of 0.65 dL/g.

The polyamic acid solution was applied on a glass plate as a substrate with a bar coater. The resultant coating film was heated at 120°C for 10 minutes, 150°C for 40 minutes, 180°C for 60 minutes, 200°C for 10 minutes, 250°C for 10 minutes, and then 500°C for 5 minutes, to form a polyimide layer having a thickness of 10 $\mu$m on the glass plate, thereby providing a polyimide laminate.

The polyimide layer was separated from the substrate, and then the TGA measurement was carried out, and the 5% weight loss temperature was determined and the value was taken as an index of outgas generation rate. The film coloring evaluation was also carried out. The results are shown in Table 2.

<Example 11>

In a 500 mL (internal volume) glass reaction vessel equipped with a stirrer and a nitrogen-gas charging/discharge tube was placed 449.9976 g of N-methyl-2-pyrrolidone as a solvent. And then, 13.4400 g (0.1243 mol) of PPD and 36.5598 g (0.1243 mol) of s-BPDA were added thereto, and the mixture was stirred at 50°C to provide a polyamic acid solution having a solid content of 9.10 %, and an inherent viscosity of 2.70 dL/g.

The polyamic acid solution was applied on a glass plate as a substrate with a bar coater. The resultant coating film was heated at 120°C for 10 minutes, 150°C for 40 minutes, 180°C for 60 minutes, 200°C for 10 minutes, 250°C for 10 minutes, and then 500°C for 5 minutes, thereby providing a laminate of the glass plate and a polyimide film having a thickness of 10 μm.

The polyimide layer was separated from the substrate, and then the TGA measurement was carried out, and the 5% weight loss temperature was determined and the value was taken as an index of outgas generation rate. The film coloring evaluation was also carried out. The results are shown in Table 2.

<Comparative Example 1>

The same procedure was performed as in Example 2 to provide a polyamic acid solution.

The polyamic acid solution was applied on a glass plate as a substrate with a bar coater. The resultant coating film was heated at 120°C for 10 minutes, 150°C for 40 minutes, 180°C for 60 minutes, 200°C for 10 minutes, 250°C for 10 minutes, and then 500°C for 5 minutes, in an attempt to form a polyimide layer having a thickness of 100 μm on the glass plate, thereby providing a polyimide laminate. The polyimide layer obtained was foamed, and a polyimide layer suitable for practical use could not be obtained.

The polyimide layer was separated from the substrate, and then the TGA measurement was carried out, and the 5% weight loss temperature was determined and the value was taken as an index of outgas generation rate. The results are shown in Table 2.

<Comparative Example 2>

The same procedure was performed as in Example 2 except that the coating film of the polyamic acid solution was heated at 120°C for 10 minutes, 150°C for 40 minutes, 180°C for 60 minutes, and then 200°C for 10 minutes, to form a polyimide layer. The results are shown in Table 2.

<Comparative Example 3>

The same procedure was performed as in Example 2 except that the coating film of the polyamic acid solution was heated at 120°C for 10 minutes, 150°C for 40 minutes, 180°C for 60 minutes, 200°C for 10 minutes, 250°C for 10 minutes, and then 350°C for 5 minutes, to form a polyimide layer. The results are shown in Table 2.

<Comparative Example 4>

The same procedure was performed as in Example 10 except that the coating film of the polyamic acid solution was heated at 120°C for 10 minutes, 150°C for 40 minutes, 200°C for 10 minutes, 250°C for 10 minutes, and then 500°C for 5 minutes, to form a polyimide layer. The results are shown in Table 2.

<Reference Example A1>

The same procedure was performed as in Example 2 to provide a polyamic acid solution.

The polyamic acid solution was applied on a glass plate as a substrate with a bar coater. The resultant coating film was heated at 120°C for 10 minutes and 150°C for 15 minutes, and then peeled from the substrate to provide a self-supporting film. Subsequently, the self-supporting film was heated at 150°C for 25 minutes, 180°C for 60 minutes, 200°C for 10 minutes, 250°C for 10 minutes, and then 500°C for 5 minutes, while fixing four sides of the film with pin tenters, thereby providing a polyimide film having a thickness of 10 μm.

For the polyimide film, the TGA measurement was carried out, and the 5% weight loss temperature was determined and the value was taken as an index of outgas generation rate. The film coloring evaluation was also carried out. The results are shown in Table 2.

<Reference Example B1>

The same procedure was performed as in Example 2 to provide a polyamic acid solution.

The polyamic acid solution was applied on a glass plate as a substrate with a bar coater. The resultant coating film was heated at 120°C for 10 minutes and 150°C for 15 minutes, and then peeled from the substrate to provide a self-supporting film. Subsequently, the self-supporting film was heated at 150°C for 25 minutes, 200°C for 10 minutes, 250°C for 10 minutes, and then 500°C for 5 minutes, while fixing four sides of the film with pin tenters, thereby providing a polyimide film having a thickness of 10 μm.

For the polyimide film, the TGA measurement was carried out, and the 5% weight loss temperature was determined and the value was taken as an index of outgas generation rate. The film coloring evaluation was also carried out. The results are shown in Table 2.

<Reference Example A2>

The same procedure was performed as in Example 10 to provide a polyamic acid solution.
The polyamic acid solution was applied on a glass plate as a substrate with a bar coater. The resultant coating film was heated at 120°C for 10 minutes and 150°C for 15 minutes, and then peeled from the substrate to provide a self-supporting film. Subsequently, the self-supporting film was heated at 150°C for 25 minutes, 180°C for 60 minutes, 200°C for 10 minutes, 250°C for 10 minutes, and then 500°C for 5 minutes, while fixing four sides of the film with pin tenters, thereby providing a polyimide film having a thickness of 10 $\mu$m.
For the polyimide film, the TGA measurement was carried out, and the 5% weight loss temperature was determined and the value was taken as an index of outgas generation rate. The film coloring evaluation was also carried out. The results are shown in Table 2.

<Reference Example B2>

The same procedure was performed as in Example 10 to provide a polyamic acid solution.
The polyamic acid solution was applied on a glass plate as a substrate with a bar coater. The resultant coating film was heated at 120°C for 10 minutes and 150°C for 15 minutes, and then peeled from the substrate to provide a self-supporting film. Subsequently, the self-supporting film was heated at 150°C for 25 minutes, 200°C for 10 minutes, 250°C for 10 minutes, and then 500°C for 5 minutes, while fixing four sides of the film with pin tenters, thereby providing a polyimide film having a thickness of 10 $\mu$m.
For the polyimide film, the TGA measurement was carried out, and the 5% weight loss temperature was determined and the value was taken as an index of outgas generation rate. The film coloring evaluation was also carried out. The results are shown in Table 2.

[Table 1]

| | polyamic acid solution composition | | | | | production of polyimide laminate | | polyimide layer | | | |
|---|---|---|---|---|---|---|---|---|---|---|---|
| | tetracarboxylic acid component | diamine component | $\eta$inh (dL/g) | phosphorus compound | content of phosphorus compound | substrate | heat treatment condition | thickness of polyimide layer ($\mu$m) | appearance | content of phosphorus (ppm) | 5% weight loss temperature (°C) |
| Example 1 | s-BPDA | PPD | 0.65 | triphenyl phosphate | 2.0 wt% / 2.5 mol% | glass plate | 120°C × 10 min. + 150°C × 4p min. + 180°C × 60 min. + 200°C × 10 min. + 250°C × 10 min. + 500°C × 5 min. | 10 | ○ | 440 | 619 |
| Example 2 | s-BPDA | PPD | 0.65 | triphenyl phosphate | 5.0 wt% / 6.2 mol% | glass plate | 120°C × 10 min. + 150°C × 40 min. + 180°C × 60 min. + 200°C × 10 min. + 250°C × 10 min. + 500°C × 5 min. | 10 | ○ | | 623 |

13

(continued)

| | polyamic acid solution composition | | | | | production of polyimide laminate | | | polyimide layer | | |
|---|---|---|---|---|---|---|---|---|---|---|---|
| | tetracarboxylic acid component | diamine component | ηinh (dL/g) | phosphorus compound | content of phosphorus compound | substrate | heat treatment condition | thickness of polyimide layer (μm) | appearance | content of phosphorus (ppm) | 5% weight loss temperature (°C) |
| Example 3 | s-BPDA | PPD | 0.65 | triphenyl phosphate | 15.0 wt% / 18.5 mol% | glass plate | 120°C × 10 min. + 150°C × 40 min. + 180°C × 60 min. + 200°C × 10 min. + 250°C × 10 min. + 500°C × 5 min. | 10 | △ | 3400 | 616 |
| Example 4 | s-BPDA | PPD | 0.65 | phosphoric acid monoethyl ester | 5.0 wt% / 16.0 mol% | glass plate | 120°C × 10 min. + 150°C × 40 min. + 180°C × 60 min. + 200°C × 10 min. + 250°C × 10 min. + 500°C × 5 min. | 10 | ○ | | 622 |

| | polyamic acid solution composition | | | | | production of polyimide laminate | | polyimide layer | | | |
|---|---|---|---|---|---|---|---|---|---|---|---|
| | tetracarboxylic acid component | diamine component | ηinh (dL/g) | phosphorus compound | content of phosphorus compound | substrate | heat treatment condition | thickness of polyimide layer (μm) | appearance | content of phosphorus (ppm) | 5% weight loss temperature (°C) |
| Example 5 | s-BPDA | PPD | 0.65 | phosphoric acid monolauryl ester | 5.0 wt%  /  7.6 mol% | glass plate | 120°C × 10 min. + 150°C × 40 min. + 180°C × 60 min. + 200°C × 10 min. + 250°C × 10 min. + 500°C × 5 min. | 10 | Δ | | 620 |
| Example 6 | s-BPDA | PPD | 0.65 | polyphosphoric acid | 0.8 wt%  /  4.0 mol% | glass plate | 120°C × 10 min. + 150°C × 40 min. + 180°C × 60 min. + 200°C × 10 min. + 250°C × 10 min. + 500°C × 5 min. | 10 | ○ | 210 | 620 |

EP 2 722 174 A1

15

(continued)

| | polyamic acid solution composition | | | | | production of polyimide laminate | | polyimide layer | | | |
|---|---|---|---|---|---|---|---|---|---|---|---|
| | tetracarboxylic acid component | diamine component | $\eta$inh (dL/g) | phosphorus compound | content of phosphorus compound | substrate | heat treatment condition | thickness of polyimide layer ($\mu$m) | appearance | content of phosphorus (ppm) | 5% weight loss temperature (°C) |
| Example 7 | s-BPDA | PPD | 2.7 | triphenyl phosphate | 5.0 wt%<br>6.2 mol% | glass plate | 120°C × 10 min. +<br>150°C × 40 min. +<br>180°C × 60 min. +<br>200°C × 10 min. +<br>250°C × 10 min. +<br>500°C × 5 min. | 10 | ○ | | 615 |
| Example 8 | s-BPDA | PPD | 0.65 | triphenyl phosphate | 5.0 wt%<br>6.2 mol% | glass plate | 120°C × 10 min. +<br>150°C × 40 min. +<br>180°C × 60 min. +<br>200°C × 10 min. +<br>250°C × 10 min. +<br>500°C × 5 min. | 40 | △ | | 613 |

(continued)

| | polyamic acid solution composition | | | | | production of polyimide laminate | | polyimide layer | | | |
|---|---|---|---|---|---|---|---|---|---|---|---|
| | tetracarboxylic acid component | diamine component | $\eta$inh (dL/g) | phosphorus compound | content of phosphorus compound | substrate | heat treatment condition | thickness of polyimide layer ($\mu$m) | appearance | content of phosphorus (ppm) | 5% weight loss temperature (°C) |
| Example 9 | s-BPDA | PPD | 0.65 | triphenyl phosphate | 5.0 wt%<br>6.2 mol% | glass plate | 120°C × 10 min. +<br>150°C × 40 min. +<br>180°C × 60 min. +<br>200°C × 10 min. +<br>250°C × 10 min. +<br>400°C × 5 min. | 10 | ○ | | 608 |

EP 2 722 174 A1

[Table 2]

| | polyamic acid solution composition | | | | | production of polyimide laminate | | polyimide layer | | | |
|---|---|---|---|---|---|---|---|---|---|---|---|
| | tetracarboxylic acid component | diamine component | ηinh (dL/g) | phosphorus compound | content of phosphorus compound | substrate | heat treatment condition | thickness of polyimide layer (μm) | appearance | content of phosphorus (ppm) | 5% weight loss temperature (°C) |
| Example 10 | s-BPDA | PPD | 0.65 | none | | glass plate | 120°C × 10 min. + 150°C × 40 min. + 180°C × 60 min. + 200°C × 10 min. + 250°C × 10 min. + 500°C × 5 min. | 10 | ○ | | 599 |
| Example 11 | s-BPDA | PPD | 2.7 | none | | glass plate | 120°C × 10 min. + 150°C × 40 min. + 180°C × 60 min. + 200°C × 10 min. + 250°C × 10 min. + 500°C × 5 min. | 10 | ○ | | 605 |

| | polyamic acid solution composition | | | | | production of polyimide laminate | | polyimide layer | | | |
|---|---|---|---|---|---|---|---|---|---|---|---|
| | tetracarboxylic acid component | diamine component | ηinh (dL/g) | phosphorus compound | content of phosphorus compound | substrate | heat treatment condition | thickness of polyimide layer (μm) | appearance | content of phosphorus (ppm) | 5% weight loss temperature (°C) |
| Comparative Example 1 | s-BPDA | PPD | 0.65 | triphenyl phosphate | 5.0 wt% / 6.2 mol% | glass plate | 120°C × 10 min. + 150°C × 40 min. + 180°C × 60 min. + 200°C × 10 min. + 250°C × 10 min. + 500°C × 5 min. | 100 | occurrence of foaming | | 587 |
| Comparative Example 2 | s-BPDA | PPD | 0.65 | triphenyl phosphate | 5.0 wt% / 6.2 mol% | glass plate | 120°C × 10 min. + 150°C × 40 min. + 180°C × 60 min. + 200°C × 10 min. | 10 | ○ | | 404 |

| | polyamic acid solution composition | | | | | production of polyimide laminate | | polyimide layer | | | |
|---|---|---|---|---|---|---|---|---|---|---|---|
| | tetracarboxylic acid component | diamine component | ηinh (dL/g) | phosphorus compound | content of phosphorus compound | substrate | heat treatment condition | thickness of polyimide layer (μm) | appearance | content of phosphorus (ppm) | 5% weight loss temperature (°C) |
| Comparative Example 3 | s-BPDA | PPD | 0.65 | triphenyl phosphate | 5.0 wt% / 6.2 mol% | glass plate | 120°C × 10 min. + 150°C × 40 min. + 180°C × 60 min. + 200°C × 10 min. + 250°C × 10 min. + 350°C × 5 min. | 10 | ○ | | 457 |
| Comparative Example 4 | s-BPDA | PPD | 0.65 | none | | glass plate | 120°C × 10 min. + 150°C × 40 min. + 200°C × 10 min. + 250°C × 10 min. + 500°C × 5 min. | 10 | ○ | | 593 |

(continued)

| | polyamic acid solution composition | | | | | production of polyimide laminate | | polyimide layer | | | |
|---|---|---|---|---|---|---|---|---|---|---|---|
| | tetracarboxylic acid component | diamine component | ηinh (dL/g) | phosphorus compound | content of phosphorus compound | substrate | heat treatment condition | thickness of polyimide layer (μm) | appearance | content of phosphorus (ppm) | 5% weight loss temperature (°C) |
| Reference Example A1 | s-BPDA | PPD | 0.65 | triphenyl phosphate | 5.0 wt% / 6.2 mol% | tentering | 120°C × 10 min. + 150°C × 15 min. + tentering / 150°C × 25 min. + 180°C × 60 min. + 200°C × 10 min. + / 250°C × 10 min. + 500°C × 5 min. | 10 | ○ | | 622 |
| Reference Example B1 | s-BPDA | PPD | 0.65 | triphenyl phosphate | 5.0 wt% / 6.2 mol% | tentering | 120°C × 10 min. + 150°C × 15 min. + tentering / 150°C × 25 min. + 200°C × 10 min. + / 250°C × 10 min. + 500°C × 5 min. | 10 | ○ | | 623 |

| | polyamic acid solution composition | | | | | production of polyimide laminate | | polyimide layer | | | |
|---|---|---|---|---|---|---|---|---|---|---|---|
| | tetracarboxylic acid component | diamine component | $\eta inh$ (dL/g) | phosphorus compound | content of phosphorus compound | substrate | heat treatment condition | thickness of polyimide layer ($\mu$m) | appearance | content of phosphorus (ppm) | 5% weight loss temperature (°C) |
| Reference Example A2 | s-BPDA | PPD | 0.65 | none | | tentering | 120°C × 10 min. + 150°C × 15 min. + tentering / 150°C × 25 min. + 180°C × 60 min. + 200°C × 10 min. + / 250°C × 10 min. + 500°C × 5 min. | 10 | ○ | | 615 |
| Reference Example B2 | s-BPDA | PPD | 0.65 | none | | tentering | 120°C × 10 min. + 150°C × 15 min. + tentering / 150°C × 25 min. + 200°C × 10 min. + / 250°C × 10 min. + 500°C × 5 min. | 10 | ○ | | 618 |

EP 2 722 174 A1

As can be seen from Reference Example A1 and Reference Example B1, and Reference Example A2 and Reference Example B2, in contrast to the case where a heat treatment for imidization is performed in a state where a volatile component evaporates only from one side, as in Examples 1 to 10, in the case where a self-supporting film is prepared and peeled from a substrate, and then the self-supporting film is subjected to a heat treatment for imidization, thereby providing a polyimide film, the 5% weight loss temperature of the polyimide film wherein imidization was conducted by heating the polyamic acid solution at least at a temperature of from more than 150°C to less than 200°C for 10 minutes or more, and then at the highest temperature of from 400°C to 550°C is nearly equal to the 5% weight loss temperature of the polyimide film wherein imidization was conducted without heating the polyamic acid solution at a temperature of from more than 150°C to less than 200°C.

Industrial Applicability

According to the present invention, there may be provided a method for producing a polyimide laminate comprising a polyimide layer on a substrate, wherein the polyimide layer is preferably formed from a specific tetracarboxylic acid component and a specific diamine component, i.e. a tetracarboxylic acid component comprising 3,3',4,4'-biphenyltetracarboxylic dianhydride as the main component and a diamine component comprising p-phenylenediamine as the main component, and thereby has excellent properties such as heat resistance, chemical resistance, radiation resistance, electrical insulation properties, dimensional stability, and mechanical properties, and the polyimide layer has such high heat resistance that thermal decomposition in the temperature range of from 500°C to 650°C, in particular, is suppressed.

According to the present invention, there may be also provided a method for producing a polyimide laminate, by which a polyimide layer having such high heat resistance that thermal decomposition in the temperature range of from 500°C to 650°C is suppressed may be formed even when using a solution of a polyamic acid having a relatively low molecular weight, which is generally not used when a polyimide film is produced.

The polyimide laminate of the present invention may be suitably used for a plastic substrate, which is an alternative to glass substrate, for a display device such as a liquid crystal display, an EL display and an electronic paper, by further laminating another material on a surface of the polyimide layer and then separating the substrate therefrom finally.

**Claims**

1. A method for producing a polyimide laminate comprising a substrate and a polyimide layer having a thickness of less than 50 μm, the method comprising:

    forming a thin film of a polyamic acid solution composition on the substrate; and
    heating the obtained laminate of the substrate and the thin film of the polyamic acid solution composition at least at a temperature of from more than 150°C to less than 200°C for 10 minutes or more, and then heating the laminate at the highest temperature of from 400°C to 550°C, to form the polyimide layer having a thickness of less than 50 μm on the substrate.

2. The method for producing a polyimide laminate according to Claim 1, wherein the time period for which the laminate of the substrate and the polyamic acid solution composition is heated at a temperature of from more than 150°C to less than 200°C is 30 minutes or more.

3. The method for producing a polyimide laminate according to Claim 1 or 2, wherein the polyamic acid solution composition comprises a polyamic acid, which is obtained from a tetracarboxylic acid component comprising 3,3',4,4'-biphenyltetracarboxylic dianhydride as the main component and a diamine component comprising p-phenylenediamine as the main component.

4. The method for producing a polyimide laminate according to any one of Claims 1 to 3, wherein the polyamic acid solution composition comprises a phosphorus compound.

5. The method for producing a polyimide laminate according to Claim 4, wherein the content of phosphorus in the polyimide layer formed [weight of phosphorus/weight of polyimide layer] is 100 to 3700 ppm.

6. The method for producing a polyimide laminate according to any one of Claims 3 to 5, wherein the phosphorus compound does not have an alkyl chain or the phosphorus compound has an alkyl chain containing not more than 16 carbon atoms.

7. The method for producing a polyimide laminate according to any one of Claims 1 to 6, wherein the inherent viscosity of the polyamic acid in the polyamic acid solution composition is 2.0 dL/g or less.

8. A polyimide laminate obtained by
forming a thin film of a polyamic acid solution composition on a substrate; and
heating the obtained laminate of the substrate and the thin film of the polyamic acid solution composition at least at a temperature of from more than 150°C to less than 200°C for 10 minutes or more, and then heating the laminate at the highest temperature of from 400°C to 550°C, to form a polyimide layer having a thickness of less than 50 μm on the substrate.

9. A laminate obtained by further laminating another material on a surface of the polyimide layer of the polyimide laminate according to Claim 8.

10. A laminate obtained by separating the substrate of the polyimide laminate from the laminate according to Claim 9.

<table>
<tr><td colspan="2"><strong>INTERNATIONAL SEARCH REPORT</strong></td><td>International application No.<br>PCT/JP2012/065272</td></tr>
</table>

**A. CLASSIFICATION OF SUBJECT MATTER**
*B32B27/34*(2006.01)i, *B05D3/02*(2006.01)i, *B05D7/24*(2006.01)i

According to International Patent Classification (IPC) or to both national classification and IPC

**B. FIELDS SEARCHED**

Minimum documentation searched (classification system followed by classification symbols)
B32B1/00-43/00, B05D1/00-7/26

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-260608 A  (Nippon Steel Chemical Co., Ltd.),<br>11 October 2007 (11.10.2007),<br>claims; paragraphs [0027] to [0037]; examples<br>(Family: none) | 8-10<br>1-7 |
| X<br>A | JP 60-206639 A  (Nitto Electric Industrial Co., Ltd. et al.),<br>18 October 1985 (18.10.1985),<br>claims; page 5, upper left column, line 15 to upper right column, line 3; examples<br>& DE 3511680 A1          & FR 2561991 A1<br>& GB 2158367 A          & US 4623563 A<br>& US 4731287 A | 8-10<br>1-7 |

[X] Further documents are listed in the continuation of Box C.       [ ] See patent family annex.

* Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

Date of the actual completion of the international search
   29 August, 2012 (29.08.12)

Date of mailing of the international search report
   11 September, 2012 (11.09.12)

Name and mailing address of the ISA/
   Japanese Patent Office

Authorized officer

Facsimile No.

Telephone No.

Form PCT/ISA/210 (second sheet) (July 2009)

**INTERNATIONAL SEARCH REPORT**

| International application No. |
| --- |
| PCT/JP2012/065272 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X<br>A | JP 62-136275 A  (Hitachi Chemical Co., Ltd.),<br>19 June 1987 (19.06.1987),<br>claims; page 3, lower left column, line 15 to<br>lower right column, line 18; examples<br>(Family: none) | 8-10<br>1-7 |
| X<br>A | JP 3-215581 A  (Daicel Chemical Industries,<br>Ltd.),<br>20 September 1991 (20.09.1991),<br>claims; examples<br>(Family: none) | 8-10<br>1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08143688 A
- JP H0228257 A
- JP H05315630 A
- JP 2005298590 A